(19) Europäisches Patentamt
European Patent Office
Office européen des brevets

(11) EP 2 817 265 B1

(12) # EUROPÄISCHE PATENTSCHRIFT

(45) Veröffentlichungstag und Bekanntmachung des Hinweises auf die Patenterteilung:
**04.07.2018 Patentblatt 2018/27**

(21) Anmeldenummer: **13704477.2**

(22) Anmeldetag: **18.02.2013**

(51) Int Cl.:
*C03B 5/225* (2006.01) *C03C 10/12* (2006.01)
*C03C 1/00* (2006.01) *C03C 3/085* (2006.01)
*C03C 3/087* (2006.01) *C03C 3/095* (2006.01)

(86) Internationale Anmeldenummer:
**PCT/EP2013/053187**

(87) Internationale Veröffentlichungsnummer:
**WO 2013/124240 (29.08.2013 Gazette 2013/35)**

(54) **VERFAHREN ZUR HERSTELLUNG VON LITHIUM-ALUMO-SILICAT-GLASKERAMIKEN**
METHOD FOR PRODUCING LITHIUM ALUMINOSILICATE GLASS-CERAMICS
PROCÉDÉ DE FABRICATION DE VITROCÉRAMIQUES D'ALUMINOSILICATE DE LITHIUM

(84) Benannte Vertragsstaaten:
**AL AT BE BG CH CY CZ DK EE ES FI FR GB GR HR HU IE IS IT LI LT LU LV MC MK MT NL NO PL PT RO RS SE SI SK SM TR**

(30) Priorität: **22.02.2012 DE 102012202695**

(43) Veröffentlichungstag der Anmeldung:
**31.12.2014 Patentblatt 2015/01**

(73) Patentinhaber: **Schott AG**
**55122 Mainz (DE)**

(72) Erfinder:
- **LENTES, Frank-Thomas**
  **55411 Bingen (DE)**
- **NAUMANN, Karin**
  **55270 Ober-Olm (DE)**
- **SCHIFFNER, Ulrich**
  **55126 Mainz (DE)**
- **SIEBERS, Friedrich**
  **55283 Nierstein (DE)**
- **MÜLLER, Christian**
  **55122 Mainz (DE)**
- **SCHÖNBERGER, Klaus**
  **55127 Mainz (DE)**
- **WEISS, Evelin**
  **55131 Mainz (DE)**

(74) Vertreter: **Mehler Achler**
**Patentanwälte Partnerschaft mbB**
**Bahnhofstraße 67**
**65185 Wiesbaden (DE)**

(56) Entgegenhaltungen:
**EP-A1- 1 837 312** **WO-A1-2012/010278**
**WO-A2-2010/040443** **DE-A1-102010 032 113**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 817 265 B1

## Beschreibung

Die Erfindung betrifft ein Verfahren zur Herstellung von Lithium-Alumo-Silicat-Glaskeramiken.

Bei der Herstellung von Glas wird ein Gemenge in eine Schmelzwanne eingebracht und das Gemenge erschmolzen, wobei das Gemenge zunächst in das Stadium der Gemengehaufenphase überführt wird, die auch als Rauschmelze bezeichnet wird, die den Einschmelzvorgang des Gemenges beschreibt.

Hierbei bildet sich eine Gemengedecke aus, unterhalb der die Schmelze sich in Form einer linksdrehenden Hauptströmungswalze bewegt. Von dieser Strömungswalze löst sich teilweise ein heißer Schmelzenstrom ab, der nach oben aufsteigt. Dieser Punkt wird als thermischer Quellpunkt bezeichnet. Der Quellpunkt markiert in einer Schmelzwanne den Übergang von dem ersten Bereich in den zweiten Bereich der Wanne.

In "Glastechnische Fabrikationsfehler", herausgegeben von H. Jepsen-Marwedel und R. Brückner, 4. Auflage, Springer-Verlag wird beschrieben, dass unter dem Einfluss hoher Temperaturen in der Schmelzwanne sich auf der Oberfläche des Gemenges eine dünne Schmelzschicht ausbildet, deren Dicke nur einige Millimeter beträgt und die unter der Einwirkung der Schwerkraft abfließt. Durch die aus dem Innern des Gemenges ausbrechenden Gase, die große Blasen bilden und die Schmelzschicht löchrig erscheinen lassen, wird die neugebildete Glasschmelze vom Gemenge abgedrängt.

Im Wesentlichen wird das Gemenge durch die unter den Gemengeteppich eintauchende Glasströmung erhitzt und aufgeschmolzen. Das an der heißen Schmelzfront an der Gemengeunterseite gebildete Reaktionsgas dringt in die poröse Gemengeschicht ein und strömt durch die Hohlräume nach oben.

Der Temperaturanstieg im Innern der Gemengeschicht verläuft langsam, so dass genügend Zeit für den Ablauf der Schmelzreaktionen bleibt. Die Reaktionen in der Gemengehaufenphase sind für die einzelnen Glassysteme verschieden. Allgemein gilt jedoch, dass zuerst die aktiveren Komponenten durch Feststoffreaktionen feste Lösungen und eutektische Phasen bilden, die dann durch Ausbildung von Schmelze die weiteren Reaktionen auch zwischen den reaktionsträgeren Gemengebestandteilen beschleunigen.

Während der Rauschmelze sind bis ca. 1400 °C silikatbildende Reaktionen abgeschlossen und anschließend werden die restlichen Quarzkörner, $Al_2O_3$-Körner und zirkonhaltige Körner aufgelöst. Für die Geschwindigkeit der Auflösung ist neben der Temperatur die Menge der ungelösten Körner und ihre Größe bestimmend.

Mit dem Gemenge kommen bis zu 20 Gew% Gase, die an die Rohstoffe gebunden sind, in die Schmelzwanne. Durch die Zersetzung dieser Rohstoffe, insbesondere der Carbonate, wird eine riesige Menge an Gasen frei, von denen die Hauptmenge während der Gemengehaufenreaktion und der Rauschmelze an die Ofenatmosphäre abgegeben wird. Der in Form von Blasen nach der Rauschmelze noch verbliebene Rest von etwa 0,001 bis 0,1 Vol.% der freigesetzten Gasmenge sowie die gelöst in der Schmelze verbliebenen Gase müssen während der nachfolgenden Läuterprozesse entfernt bzw. auf ein nicht mehr störendes Maß reduziert werden.

Vor allem während des Auflöseprozesses von Sandkörnern und zirkonhaltigen Körnern entstehen an diesen feine Gasbläschen, die ebenfalls aus der Glasschmelze entfernt werden müssen.

Dem Gemenge können auch Scherben, bevorzugt arteigene Scherben in einer Konzentration bis über 50% zugesetzt werden.

Es ist Aufgabe der Läuterung, die noch vorhandenen Blasen zu entfernen, die Konzentration gelöster Gase, die Anlass zum Nachgasen sein könnten, zu vermindern und die Schmelze zu homogenisieren. Hierzu werden in der Glastechnik thermische, mechanische und chemische Läuterverfahren oder eine Kombination derselben eingesetzt.

Alle verfahrenstechnischen Maßnahmen zur Läuterung haben zum Ziel, die Aufstiegsgeschwindigkeit *v* von Blasen und damit die Zeit für den Blasenaufstieg zu verkürzen. Die Blasenaufstiegsgeschwindigkeit *v* von Blasen mit einem Durchmesser *d* ist nach Stokes gegeben durch:

$$v = \frac{1}{18}\frac{g\,\rho\,d^2}{\eta}.$$

(*g*: Erdbeschleunigung; $\rho$: Dichte der Glasschmelze, $\eta$: Viskosität der Glasschmelze) Um die Blasenaufstiegsgeschwindigkeit zu erhöhen, kann man im Wesentlichen zwei Parameter verändern: den Durchmesser der Blasen *d* vergrößern (sehr wirksam wegen $d^2$) und/oder die Viskosität der Glasschmelze durch Temperaturerhöhung im Läuterbereich verringern.

In der DE 199 39 771 A1 wird beschrieben, dass allgemein zwei prinzipielle Läuterverfahren bekannt sind, die sich im Wesentlichen durch die Art und Weise der Läutergaserzeugung unterscheiden.

Bei den physikalischen Läuterverfahren wird die Viskosität der Glasschmelze durch Temperaturerhöhung erniedrigt. Zur Erniedrigung der Viskosität werden daher während der Läuterung höhere Temperaturen in der Glasschmelze eingestellt als im Einschmelz- und Abstehbereich. Je höher die Läutertemperatur gewählt werden kann, umso effektiver ist die Blasenentfernung aus der Schmelze. Dabei sollte die Viskosität der Schmelze möglichst < $10^2$ dPa·s betragen.

Die maximal zulässige Läutertemperatur wird aber durch die Temperaturbeständigkeit des Wandmaterials des jeweils verwendeten Schmelzaggregates begrenzt und liegt in konventionellen Schmelzwannen bei ca. 1720 °C.

Am häufigsten werden chemische Läuterverfahren verwendet. Das Prinzip besteht darin, dass dem Gemenge Verbindungen zugesetzt werden, die sich entweder zersetzen und Gase entstehen lassen oder die bei höheren Temperaturen flüchtig sind, oder die in einer Gleichgewichtsreaktion bei höheren Temperaturen Gase abgeben. Diese jeweiligen Gase diffundieren in die vorhandenen Blasen ein und vergrößern sie. Zur ersten Gruppe der Verbindungen gehört beispielsweise Natriumsulfat, das z.B. zur Läuterung von Kalk-Natron-Gläsern eingesetzt wird. Die Abgabe von $SO_2$ und $O_2$ erfolgt dabei in einem Temperaturbereich von 1100 °C bis 1450 °C mit einem Maximum bei 1380 °C. Dieser Temperaturbereich entspricht in etwa dem Läuterbereich solcher Gläser.

Zur zweiten Gruppe der Verbindungen gehören beispielsweise Natriumchloride und zur letzten Gruppe der Verbindungen gehören polyvalente Oxide wie $As_2O_3$ oder $SnO_2$.

Aus der DE 199 39 787 A1 sind Gläser für die Erzeugung von transparenter, eingefärbter Glaskeramik bekannt, bei deren Herstellung unter anderem $SnO_2$ oder Sulfatverbindungen als Läutermittel eingesetzt werden. Diese Läutermittel werden als Ersatz für die Läutermittel Arsenoxid oder Antimonoxid eingesetzt. Die Hochtemperaturläuterung findet bei Temperaturen von mehr als 1975 °C statt. Angaben über die erreichte Blasenzahl werden jedoch bei Gläsern mit derartigen Läutermitteln nicht gemacht.

Es hat sich gezeigt, dass es bei der Verwendung von Sulfaten während der Hochtemperaturläuterung über 1750 °C durch die stark ansteigenden Partialdrücke von $O_2$ und vor allem von $SO_2$ auf > 5 bar zu spontaner Blasenneubildung (sogenannte Reboil-Blasen) kommt. Dadurch steigt die in den vorgeschalteten Läuterstufen erreichte niedrige Blasenkonzentration wieder an, so dass im Produkt eine Blasenkonzentration > 2/kg resultiert.

In US 7,763,559 B2 wird $SnO_2$ als Läutermittel verwendet, Sulfat aber ausdrücklich wegen des Reboil-Effektes ausgeschlossen.

Die US 6,376,403 B1 offenbart $SnO_2$ und Sulfate als Läutermittel, deren Anteile mit 0,1 bis 3 mol-% $SnO_2$ bzw. 0,004 bis 0,1 mol-% S angegeben werden. Gegenstand dieser Schrift ist eine Materialzusammensetzung für FestplattenSubstrate; eine Verfahrensbeschreibung zur Erreichung einer vorgegebenen Blasenkonzentration fehlt.

Die DE 10346197 B4 beschreibt $SnO_2$ als Läutermittel, das in einer Menge von bis zu 4 Gew.-% zugegeben wird. Die Glaszusammensetzung kann auch in Summe 0 bis 4 Gew.% an $SO_4^-$ und $Cl^-$ enthalten. Eine Verfahrensbeschreibung in Form von Temperatur-Zeit-Verläufen zur Erreichung einer möglichst geringen Blasenkonzentration fehlen.

Aus der WO 2007/018910 A2 und der WO 2008/123942 A1 ist ein Verfahren bekannt, bei dem das Rohmaterial der Schmelze bei einer Temperatur $T_1$ erschmolzen wird und die Schmelze dann auf eine zweite Temperatur $T_2$ abgekühlt wird. Anschließend wird ein oxidierendes Gas eingeleitet und die gekühlte Schmelze auf eine Temperatur $T_3 > T_1$ gebracht. Als Läutermittel wird nur $SnO_2$ erwähnt. Die Abkühlung der Schmelze während der Einleitung des oxidierenden Gases ist notwendig, um einen möglichst großen Anteil des während der Einschmelzphase unbeabsichtigt entstandenen SnO wieder zu $SnO_2$ aufzuoxidieren. Dazu muss der Partialdruck des $O_2$ in der Schmelze durch Temperaturabsenkung deutlich unter 1 bar des durchgeleiteten oxidierenden Gases abgesenkt werden.

Aus der WO2008/065166 ist bekannt, dass es beim Einsatz von $TiO_2$ als Keimbildner bei gleichzeitiger Anwesenheit von $Fe_2O_3$, $CeO_2$ oder $SnO_2$ zu Wechselwirkungen kommt, die die Transmission verringern und die Farbe in Richtung gelb bis gelbbraun verschieben. Dieser Effekt ist vor allem bei Anwesenheit von $SnO_2$ stark ausgeprägt. Ein Gehalt von ca. 0,2 Gew.% $SnO_2$ bei transparenten nichtgefärbten Lithium-Alumo-Silicat-Glaskeramiken führt zu merklichen Beeinträchtigungen von Transmission und Farbe (Gelbfärbung).

Aus der DE 10 2009 011 850 B3 ist ein Verfahren zum umweltfreundlichen Schmelzen und Läutern einer Glasschmelze für ein Ausgangsglas einer Lithium-Alumo-Silicat-Glaskeramik bekannt, bei dem unter Verzicht auf Arsen und Antimon als Läutermittel ein Zusatz von 0,1 bis < 0,6 Gew.% Zinnoxid als Hauptläuterungsmittel verwendet wird.

Die WO 2012/010278 A1 offenbart Lithium-Alumo-Silicat-Gläser, zu deren Läuterung insbesondere $SnO_2$ und $Fe_2O_3$ eingesetzt werden. Verbesserte Blasenzahlen werden mittels Hochtemperaturläuterung bei Temperaturen von mehr als 1700° C, insbesondere > 1750° C erzielt. Weitere Läuterzusätze sind $CeO_2$, $MnO_2$, Sulfat-, Sulfit-, Halogenidverbindungen.

Die EP 1 837 312 B1 beschreibt LAS-Gläser, die sich mit kurzen Keramisierungszeiten unter 2,5 h in Glaskeramiken umwandeln lassen. Als Läutermittel werden Arsen- und Antimonoxid eingesetzt. In Verbimdung mit einer Hochtemperaturläuterung > 1700° C kommt auch $SnO_2$ zum Einsatz.

Die Aufgabe der Erfindung besteht darin, ein Verfahren zur Herstellung von blasenfreien Gläsern, insbesondere von Lithium-Alumo-Silicat-Glaskeramiken anzugeben, die keine toxischen Läutermittelkomponenten enthalten.

Unter Freiheit von toxischen Läutermitteln ist zu verstehen, dass bis auf natürliche Verunreinigungen der verwendeten Rohstoffe Arsen und Antimon in Konzentrationen von weniger als 100 ppm im Gemenge enthalten sind.

Unter blasenfrei und Blasenfreiheit wird eine Blasenkonzentration von < 2/kg verstanden, wobei eine Blase einen Gaseinschluss mit einem Durchmesser > 100 $\mu$m bezeichnet.

Diese Aufgabe wird hinsichtlich des Verfahrens zur Herstellung von Lithium-Alumo-Silicat-Glaskeramiken mit den Merkmalen des Patentanspruchs 1 gelöst.

Zur Herstellung eines Lithium-Alumo-Silicat-Glases wird ein bis auf unvermeidliche Rohstoffverunreinigungen arsen- und antimon- freies Glasgemenge und als Läutermittel mindestens eine Sulfatverbindung und $SnO_2$ eingesetzt, wobei $SnO_2$ in einer Menge von 0,02 bis 0,5 Gew-% und die Sulfatverbindung in einer Menge dem Gemenge zugesetzt wird, die 0,05 - 1 Gew.-% $SO_3$ entspricht, und wobei das das Läutermittel aufweisende Glasgemenge in einer Schmelzwanne erschmolzen wird. In einem ersten Bereich der Schmelzwanne wird eingeschmolzen und eine Primärläuterung durchgeführt, wobei im ersten Bereich eine mittlere Schmelztemperatur $T_1$ auf $T_1$ > 1560 °C bis 1640° C und eine mittlere Verweildauer der Schmelze $t_1$ auf $t_1$ > 2 Stunden eingestellt wird. Der Anteil des durch die Zersetzung der Sulfatverbindung entstandenen $SO_3$ wird während der Durchführung der Primärläuterung auf weniger als 0,002 Gew. % abgesenkt. In einem zweiten Bereich wird eine Sekundärläuterung durchgeführt, wobei im zweiten Bereich eine mittlere Schmelztemperatur $T_2$ auf $T_2$ > 1640 °C bis 1720° C und die mittlere Verweildauer der Schmelze $t_2$ auf $t_2$ > 1 Stunde eingestellt wird, wobei für das Verhältnis $t_1/t_2$ gilt $2 < \frac{t_1}{t_2} < 25$.

Das so hergestellte Lithium-Alumo-Silicat-Glas wird durch eine thermische Behandlung in eine Glaskeramik umgewandelt.

Unter der Primärläuterung wird die Entfernung von Blasen (und gelöster Gase) im Einschmelzbereich, also im Bereich der ersten Strömungswalze bis zum Quellpunkt verstanden. Dabei wird die Blasenkonzentration von ca. $10^7$/kg bereits um mehrere Größenordnungen auf etwa $10^4$/kg reduziert.

Unter der Sekundärläuterung wird der Prozess nach dem ersten Quellpunkt (d.h. nach der Primärläuterung) verstanden, wobei durch eine Temperaturerhöhung der Schmelze um beispielsweise 50 °C und mehr sowohl deren Viskosität erniedrigt und gleichzeitig der Blasendurchmesser von vorhandenen Blasen durch Eindiffusion von Sauerstoff vergrößert wird, so dass die Blasen leichter aufsteigen und die Schmelze verlassen können.

Die Bereiche der Primär- und der Sekundärläuterung können durch Einbauten wie Blasdüsen, Wälle oder Hängesteine getrennt werden. Auch können die Primär- und die Sekundärläuterung in zwei getrennten Kammern oder zwei getrennten Schmelzwannen durchgeführt werden. Jeder Bereich befindet sich in einer Kammer oder einer Wanne, wobei die Kammern oder Wannen beispielsweise durch einen Kanal miteinander verbunden sind.

Unter LAS-Gläsern werden Lithium-Alumosilicat-Gläser verstanden. Zur Herstellung von Glaskeramiken enthalten diese Gläser Keimbildner wie vorzugsweise $TiO_2$ und $ZrO_2$. Die Lithium-Alumo-Silicat-Gläser können in einem weiteren thermischen Prozess in eine Glaskeramik umgewandelt werden.

Unter der mittleren Schmelztemperatur wird die zeit- und ortsgemittelte Temperatur im Bereich der jeweiligen Strömungswalze, also zum Beispiel in der ersten Strömungswalze, verstanden.

Unter der mittleren Verweildauer t der Schmelze in den beiden Bereichen einer Schmelzwanne wird

$$t = \frac{\rho A_i L_i}{\dot{m}}$$

($\dot{m}$: Massendurchsatz [kg/d mit d=Tag], $\rho$: Dichte der Schmelze [kg/m$^3$], $A_i$: Querschnittsfläche der Wanne im $i$-ten Abschnitt [m$^2$]; $L_i$: Länge des $i$-ten Aggregatabschnittes [m]) verstanden.

Die mittlere Verweildauer der Schmelze in den beiden Bereichen kann z. B. durch die Länge der Wanne eingestellt werden.

Überraschenderweise hat sich im Laborversuchen gezeigt, dass eine 2-stufige Läuterung von Lithium-Alumo-Silicat-Gläsern mit Sulfat und $SnO_2$ die Herstellung eines blasenfreien Glases ermöglicht, und zwar dann, wenn während des Einschmelzens durch die Zersetzung des Sulfates in $SO_2$ und $O_2$ eine sehr wirksame Primärläuterung stattfindet, die sich in einer starken Reduktion der Startblasen-Konzentration für die Sekundärläuterung ausdrückt. In einem zweiten Schritt wird während der Sekundärläuterung (ohne Sulfat) die $O_2$-Freisetzung des $SnO_2$ zur Läuterung genutzt.

Es hat sich gezeigt, dass der Blasenkonzentration und dem Schwefelanteil in der Glasschmelze am Ende der Primärläuterung eine entscheidende Bedeutung für die Erzielung der Blasenfreiheit des Endproduktes zukommt.

Bei der Primärläuterung wird wegen des gekoppelten Gleichgewichts von Sulfat und $SnO_2$ die Zersetzung von $SnO_2$ in SnO und $O_2$ gehemmt, so dass für die Sekundärläuterung eine höhere $SnO_2$-Konzentration als ohne Sulfatzugabe zur Verfügung steht. Das Sulfat muss nach der Primärläuterung praktisch vollständig aus der Schmelze entfernt werden, damit bei der Sekundärläuterung die Umsetzung des $SnO_2$ nicht gehemmt wird, und möglichst viel Sauerstoff freisetzt wird, um die Blasen durch Eindiffusion von Sauerstoff zu vergrößern und anschließend zu entfernen.

Die Zersetzung des $SO_3$ und die des $SnO_2$ erfolgt gemäß folgender Reaktionsgleichungen:

$$SO_3 \rightarrow SO_2\uparrow + \tfrac{1}{2}O_2$$

$$SnO_2 \rightleftarrows SnO + \tfrac{1}{2}O_2$$

Es wurde festgestellt, dass dann, wenn in der Schmelzwanne bei Temperaturen > 1560 °C mit Verweilzeiten > 2 h eingeschmolzen und eine Primärläuterung durchgeführt wird, bereits eine Blasenkonzentration von < 5000/kg erreicht wird, die weiter durch die nachfolgende Sekundärläuterung auf < 2/kg abgesenkt wird.

Es hat sich gezeigt, dass bei diesen Werten am Ende der Primärläuterung mit einer anschließenden Sekundärläuterung unter Zersetzung von $SnO_2$ eine nahezu vollständige Blasenfreiheit des Glases erreicht werden kann.

Der Erfindung liegt daher die Erkenntnis zugrunde, dass eine nahezu vollständige Umsetzung der Sulfatverbindung angestrebt werden muss, bevor die Sekundärläuterung durchgeführt wird. Das bedeutet, dass der Restgehalt an $SO_3$ weniger als 0,002 Gew.%, bevorzugt < 0,0018 Gew.%, insbesondere < 0,0015 Gew.% beträgt.

Es ist daher wünschenswert, möglichst viel $SO_3$ bereits vorzugsweise im Stadium der Rauschmelze und insbesondere während der Primärläuterung in $SO_2$ und $O_2$ aufzuspalten, damit die frei gewordene Gasmenge das Austragen der im Glasgemenge und in der Rauschmelze enthaltenen Gase verstärken kann. Die Startblasenzahl für die sich anschließende Sekundärläuterung wird signifikant herabgesetzt.

Ein bevorzugter Temperaturbereich für $T_1$ ist insbesondere > 1580 °C bis 1620 °C und besonders bevorzugt > 1600 °C bis 1620 °C.

Ein bevorzugter Temperaturbereich für $T_2$ ist insbesondere > 1660 °C bis 1680 °C.

Die mittlere Verweildauer $t_1$ liegt vorzugsweise im Bereich von > 2h bis 25 h, insbesondere > 2 h bis 15 h und besonders bevorzugt im Bereich von > 2 h bis 10 h.

Die mittlere Verweildauer $t_2$ liegt vorzugsweise im Bereich von > 1 h bis 10 h, insbesondere > 1 h bis 6 h und besonders bevorzugt im Bereich von > 1 h bis 4 h.

Es ist bevorzugt, eher die mittlere Verweildauer $t_1$ zu verlängern als die mittlere Verweildauer $t_2$, weil es sich gezeigt hat, dass der Sulfatabbau und der Gasfluss im ersten Bereich der Wanne größer ist als im zweiten Bereich. Für das Verhältnis von $\frac{t_1}{t_2}$ gilt daher insbesondere $10 < \frac{t_1}{t_2} < 25.$

Vorzugsweise wird als sulfatisches Läutermittel mindestens ein Alkalisulfat und/oder mindestens ein Erdalkalisulfat dem Glasgemenge zugegeben. Bei Alkalisulfaten wird Natriumsulfat bevorzugt und bei Erdalkalisulfaten werden bevorzugt $BaSO_4$ und/oder $CaSO_4$ eingesetzt. Je höher die Temperatur ist, bei der eingeschmolzen wird, umso bevorzugter sind Erdalkalisulfate im Vergleich zu Alkalisulfaten weil die Freisetzung von $SO_2$ und $O_2$ bei höheren Temperaturen erfolgt.

Die Sulfatverbindung wird in einer Menge dem Glasgemenge zugesetzt, die 0,05 bis 1 Gew.-% $SO_3$ entspricht. Wird der Wert von 0,05 Gew.-% unterschritten, dann werden zuwenig Gase im Bereich der Primärläuterung entfernt und die Blasenkonzentration am Ende der Primärläuterung liegt bei > 5000/kg.

Bei einem Überschreiten von maximal 1 Gew.-% besteht das Risiko übermäßiger Gasfreisetzung beim Einschmelzen und der Primärläuterung, verbunden mit Schaumbildung auf der Glasschmelze und nicht mehr ausreichender Blasenentfernung. Außerdem steigt die $SO_2$-Menge im Abgas.

Weitere bevorzugte Anteile der Sulfatverbindung sind solche, die 0,1 bis 0,8 Gew.-%, insbesondere 0,1 bis 0,6 Gew.-% $SO_3$ entsprechen.

Es hat sich auch gezeigt, dass die Sulfatverbindung die Zahl der Einschmelzrelikte reduziert. Beispielsweise werden Zirkonoxide bis 4 Gew% durch die Sulfatverbindung schneller aufgeschmolzen, weil die Zugabe von Sulfatverbindung die Benetzung der zirkonhaltigen Körner und auch der Sandkörner deutlich verbessert und eine Segregation der Reaktionspartner während des Einschmelzens unterdrückt. Die Auflösung von Relikten führt in der Regel zur Bildung neuer kleiner Blasen. Wird die Auflösung von Relikten bis über den Läuterbereich hinaus verschleppt, ist es nicht möglich, ein blasenfreies Glas zu erhalten. Deswegen ist das durch die Sulfatverbindung beschleunigte Auflösen von Gemengerelikten von großer Bedeutung für eine effektive Läuterung.

Die Rauschmelze, die den Übergang vom Gemenge zur Schmelze beschreibt, ist durch poröse Gemengeschichten gekennzeichnet. Je nach Porosität können die im Gemenge enthaltenen Gase wie z. B. $N_2$, $NO_x$ und $CO_2$ mehr oder weniger leicht entweichen und stehen daher in den Folgeprozessen nicht oder nur zu einem geringen Anteil für die störende Blasenbildung zur Verfügung.

Vorzugsweise wird daher ein Glasgemenge eingesetzt, bei dem die mittlere Korngröße schwer schmelzender Komponenten 10 bis 300 $\mu$m beträgt. Unter schwer schmelzenden Komponenten werden die Stoffe Sand ($SiO_2$), $Al_2O_3$ und $ZrO_2$ bzw. Zirkon-Silicate verstanden.

Der Vorteil dieser Korngrößen besteht darin, dass die im Gemenge enthaltenen Gase noch besser ausgetragen werden können. Wenn die Korngröße in dem Bereich von 10 $\mu$m bis 300 $\mu$m, insbesondere im Bereich von 50 $\mu$m bis 250 $\mu$m, liegt, wird das Austragen der im Gemenge enthaltenen Gase deutlich verstärkt.

Durch die Wahl der mittleren Korngröße kann die Dauer der Schmelze im Stadium der Rauschmelze eingestellt werden. Je grober das Gemenge und insbesondere die mittlere Korngröße der schwer schmelzenden Komponenten gewählt wird, desto länger ist dann auch die Verweildauer $t_1$ zu wählen.

$SnO_2$ wird bevorzugt in einer Menge von 0,05 bis 0,3 Gew% zugesetzt, besonders bevorzugt von 0,1 bis 0,25 Gew%.

Unter 0,02 Gew.% $SnO_2$ erfolgt keine ausreichende Sekundärläuterung und die erforderliche Blasenkonzentration < 2 Blasen/kg ist bei weitem nicht erreichbar. $SnO_2$-Konzentrationen > 0,5 Gew.% erhöhen das Risiko unerwünschter Kristallisation bei der Heißformgebung (Walzen, Floaten). Außerdem verschlechtern sich die Lichttransmission Y und die Buntheit C* infolge der Bildung färbender Sn-Titanatkomplexe bei transparenten farblosen Gläsern und Glaskeramiken über ein tolerierbares Maß hinaus.

Das als Läutermittel eingesetzte $SnO_2$ kann nach der Sekundärläuterung vorteilhaft als $O_2$-Puffer genutzt werden, um die Entstehung von $O_2$-Blasen an Edelmetall-Bauteilen zu unterdrücken.

Es ist von Vorteil, dass bei Anwendung dieses zweistufigen Läuterprozesses mit Sulfatverbindung und $SnO_2$ auf eine Hochtemperatur-Läuterung ganz verzichtet werden kann.

Die Hochtemperatur-Läuterung ist nur für spezielle Qualitätsanforderungen in Verbindung mit $SnO_2$-Gehalten von unter 0,1 Gew. %, bevorzugt bei $SnO_2$-Gehalten von 0,02 bis < 0,1 Gew% zweckmäßig. Dies ist dann der Fall, wenn Blasenzahlen < 1/kg gefordert werden und wenn besonders hohe Anforderungen an Transmission/Helligkeit und Farbe gestellt werden.

Vorzugsweise wird die Hochtemperaturläuterung in Form einer chemischen und physikalischen Läuterung durch weitere Freisetzung von $O_2$-Läutergas aus SnO2 und durch Viskositätserniedrigung der Schmelze durchgeführt.

Die Hochtemperaturläuterung wird vorzugsweise bei Temperaturen > 1750 °C bis ca. 1950°C durchgeführt. Die Verweildauer bei der Hochtemperatur-Läuterung liegt bei mindestens 12 min, vorzugsweise bei 12 bis 20 min und besonders bevorzugt bei mindestens 15 min.

Vorzugsweise wird das Glasgemenge im ersten Bereich oxidierend eingeschmolzen. Das oxidische Einschmelzen wird durch die Einstellung der fossilen Brenner ebenso bewirkt wie durch die Sulfatverbindung selbst und hat den Vorteil, dass ein möglichst großer Anteil der Sulfatverbindung als $SO_3$ vor seiner Zersetzung gelöst wird.

Vorzugsweise wird dem Glasgemenge Nitrat in einer Menge von 0 bis 3 Gew.-% zugesetzt. Die Zugabe von Nitrat als Oxidationsmittel, insbesondere von Na-$NO_3$, verbessert die Schwefellöslichkeit in der Schmelze, was sich insofern positiv auswirkt, als dadurch die allzu frühzeitige Zersetzung der Sulfatverbindung gehemmt wird. Darüber hinaus wird die Absenkung des $O_2$-Partialdruckes in der Schmelze durch etwaige Reste reduzierender Verunreinigungen (z.B. organische Verbindungen im Gemenge) vermieden.

Mit dem erfindungsgemäßen Verfahren können sowohl transparente farblose als auch transparente eingefärbte Glaskeramiken hergestellt werden.

Eine Glaskeramik wird als transparent bezeichnet, wenn bei einer Schichtdicke von 4 mm der Transmissionsgrad im Wellenlängenbereich von 400 nm bis 2450 nm mehr als 80% beträgt.

Eine Glaskeramik wird als farblos bezeichnet, wenn die Buntheit C* im CIE-LAB-Farbsystem < 10 bei einer Glasdicke von 4mm beträgt.

Eine Glaskeramik wird als eingefärbt bezeichnet, wenn $C^* \geq 10$ bei einer Glasdicke von 4 mm beträgt.

Das Verfahren kann mit einer kontinuierlichen oder einer diskontinuierlichen Betriebsweise durchgeführt werden.

Unter einer kontinuierlichen Betriebsweise wird das Schmelzen von Glas in Glasschmelzwannen verstanden. Eine kontinuierliche Betriebsweise liegt vor, wenn die Zuführung von Rohstoffen dauerhaft und quasi-konstant erfolgt, diese in Glas umgewandelt werden und das Glas ebenso dauerhaft und quasi-konstant am Ausgang des Schmelzaggregats abgezogen wird, so dass sich im Inneren der Schmelzanlage ein Fließgleichgewicht mit einem weitgehend konstanten Volumenstrom einstellt.

Eine diskontinuierliche Betriebsweise liegt vor, wenn eine Schmelzanlage mit Rohstoffen gefüllt, diese in Glas umgewandelt werden und zu einem anderen Zeitpunkt ein vorgegebenes Glasvolumen abgezogen wird, das höchstens dem Volumen der Schmelzanlage entspricht, typischerweise wird eine bestimmte Menge Glas in eine Form gegossen.

Lichttransmission und Farbe (Buntheit) der Lithium-Alumo-Silicat-Glaskeramiken werden entscheidend durch die Menge an $SnO_2$ in der Glaskeramik beeinflusst (siehe auch Fig. 4 und 5).

Es ist ein Vorteil, dass durch Zugabe von Sulfat der $SnO_2$-Gehalt reduziert werden kann, wodurch die Lichttransmission von Lithium-Alumo-Silicat-Glaskeramiken verbessert und die Buntheit (Färbung) verringert wird.

Die zweistufige Läuterung mit einer Sulfatverbindung und $SnO_2$ hat den großen Vorteil, dass die Läutermittelmengen an Sulfat und $SnO_2$ variiert werden können. Geringe Mengen $SnO_2$ beispielsweise bis <0,1 Gew% werden durch größere Mengen Sulfatverbindungen ausgeglichen. Umgekehrt erfordern $SnO_2$-Mengen > 0,25 Gew% weniger Sulfatverbindungen.

Die Zugabe der konkreten Mengen beider Läutermittel hängt von der geforderten Blasen- und Glasspezifikation sowie den vorhandenen Möglichkeiten der Schmelzaggregate ab, d. h. wie die Primär- und Sekundärläuterung durchgeführt werden können, z. B. mit und ohne Einbauten.

Mit der Konzentration von $SnO_2$ wird außerdem die Kristallisationsfestigkeit bei der Heißformgebung und Heißnachverarbeitung beeinflusst. Eine $SnO_2$-Reduzierung ist vorteilhaft zur Vermeidung von Kristallen an formgebenden Werkzeugen und im Floatprozess sowie zur Verbesserung der Lichttransmission und Buntheit.

Ein weiterer positiver Einfluss auf die Blasenkonzentration wird vorzugsweise durch weitere Läuterzusätze wie Halogenide, z.B. Chloride, Fluoride und/oder Bromide erzielt, die vorzugweise bis zu 1 Gew.% dem Glasgemenge zugegeben werden.

Zur weiteren Erleichterung des Aufschmelzens können dem Gemenge bis zu 70 Gew.% Scherben zugegeben werden, die vorzugsweise der jeweiligen Glaszusammensetzung des Gemenges entsprechen.

Ein nicht erfindungsgemäßes Lithium-Alumo-Silicat-Glas oder alkalifreies Alumosilikat-Glas oder Lithium-Alumo-Silicat-Glaskeramik ist dadurch gekennzeichnet,

- dass das Glas oder die Glaskeramik bis auf unvermeidliche Rohstoffverunreinigungen frei von As und Sb ist und mindestens eine Sulfatverbindung und $SnO_2$ als Läutermittel aufweist,

- eine Blasenkonzentration < 2/kg aufweist, wobei eine Blase einen Gaseinschluss mit einem Durchmesser > 100 $\mu$m bezeichnet, und

- einen Anteil an $SO_3$ < 0,002 Gew.% aufweist.

Der Anteil von $SO_3$ kann bei ≤ 0,0018 Gew.%, insbesondere bei ≤ 0,0015 Gew.% liegen.

Der $SnO_2$-Anteil des nicht erfindungsgemäßen Glases oder der Lithium-Alumo-Silicat-Glaskeramik kann 0,02 bis 0,5 Gew.%, besonders bevorzugt 0,05 bis 0,3 Gew.% und insbesondere 0,1 bis 0,25 Gew.% betragen.

Dieses nicht erfindungsgemäße Glas oder diese nicht erfindungsgemäße Lithium-Alumo-Silicat-Glaskeramik kann folgende Zusammensetzung (in Gew.%) aufweisen:

| | |
|---|---|
| $Li_2O$ | 2,5 - 5,5 |
| $Na_2O$ | 0 - 3,0 |
| $K_2O$ | 0 - 3,0 |
| $\sum Na_2O+K_2O$ | 0 - 4,0 |
| MgO | 0 - 3,0 |
| CaO | 0 - 5,0 |
| SrO | 0 - 2,0 |
| BaO | 0 - 4,0 |
| ZnO | 0,1 - 4,0 |
| $Al_2O_3$ | 15 - 27 |
| $SiO_2$ | 52 - 75 |
| $TiO_2$ | 0 - 5,5 |
| $ZrO_2$ | 0,1 - 4,0 |
| $B_2O_3$ | 0 - 4,0 |
| $\sum TiO_2+ZrO_2$ | 0,1 - < 6,0 |
| $P_2O_5$ | 0 - 8,0 |
| $Nd_2O_3$ | 0 - 0,4 |
| $SnO_2$ | ≥ 0,02 |
| $TiO_2+ZrO_2+SnO_2$ | 0,1 - 6,0 |

Eine weitere bevorzugte Zusammensetzung dieses nicht erfindungsgemäßen Glases oder dieser Lithium-Alumo-Silicat-Glaskeramik kann wie folgt (in Gew.%) sein:

| | |
|---|---|
| $Li_2O$ | 3,0 - 5,5 |
| $Na_2O$ | 0 - 1,5 |
| $K_2O$ | 0 - 1,5 |
| $\sum Na_2O+K_2O$ | 0,2 - 2,0 |
| MgO | 0 - 2,0 |
| CaO | 0 - 4,5 |

(fortgesetzt)

| | |
|---|---|
| SrO | 0 - 1,5 |
| BaO | 0 - 2,5 |
| ∑ MgO+CaO+SrO+BaO | 0,5 - 5,0 |
| ZnO | 0,2 - 3,0 |
| $Al_2O_3$ | 17 - 25 |
| $SiO_2$ | 55 - 72 |
| $TiO_2$ | 0 - 4,0 |
| $ZrO_2$ | 0,1 - 3,0 |
| $B_2O_3$ | 0 - 4,0 |
| ∑ $TiO_2$+$ZrO_2$ | 0,5 - 6,0 |
| $P_2O_5$ | 0 - 8,0 |
| $Nd_2O_3$ | 0 - 0,3 |
| $SnO_2$ | 0,02 - 0,5 |
| $TiO_2$ + $ZrO_2$ + $SnO_2$ | 0,5 - 6,0 |

$TiO_2$ ist zwingend in der Zusammensetzung des Glases oder der LAS-Glaskeramik enthalten. Der Anteil an $TiO_2$ beträgt insbesondere > 0,1 Gew. %.

Das nicht erfindungsgemäße Glas kann durch Walzen oder vorzugsweise im Floatverfahren einer Heißformgebung unterworfen werden.

Vorzugsweise ist die Lithium-Alumo-Silicat-Glaskeramik transparent farblos und weist bei einer Schichtdicke von 4 mm eine Lichttransmission Y (Helligkeit) > 83 % gemäß des CIE-Farbsystems und eine Buntheit C* < = 6 gemäß des CIE-LAB-Farbsystems auf. Das gilt für rohstoff- und prozessbedingte Verunreinigungen an $Fe_2O_3$ <= 0,024 Gew%.

Die spektrale Lichttransmission Y wird an keramisierten und polierten LAS-Proben einer Dicke von 4 mm in einem Perkin-Elmer Lambda 9000 gemessen. Anschließend erfolgt die Umrechnung auf die Lichttransmission Y (Helligkeit) bei Normlicht C gemäß der Norm ASTM 1925/70.

Die Buntheit (Chromizität) C* im CIE-LAB-System ist definiert durch $C^* = \sqrt{A^{*2} + B^{*2}}$, wobei A* und B* die Farbkoordinaten in diesem System sind. Die Farbkoordinaten L*, A*, B* im CIE-LAB-System lassen sich in bekannter Weise in die Farbkoordinaten x und y und die Lichttransmission Y (Helligkeit) des CIE-Farbsystems umrechnen.

Die Lithium-Alumo-Silicat-Glaskeramik kann mindestens einen Zusatz aus der Gruppe der färbenden Komponenten V-, Cr-, Mn-, Fe-, Co-, Cu-, Ni-, Ce-, Se-Verbindungen mit Anteilen bis zu 1,5 Gew.% aufweisen, wodurch transparent gefärbte Glaskeramiken hergestellt werden.

Verwendungen von transparenten, gefärbten Lithium-Alumo-Silicat-Glaskeramiken sind für Glaskeramik-Kochplatten vorgesehen.

Verwendungen der transparenten, farblosen Lithium-Alumo-Silicat-Glaskeramiken sind für Sicherheitsverglasungen im Gebäude-, Fahrzeug- und Personenschutzbereich, für Sichtscheiben für Displays, für Festplattensubstrate, für Glaskeramik-Kochplatten und für Kaminsichtscheiben vorgesehen.

Die Erfindung wird nachfolgend anhand der Figuren näher erläutert.

Es zeigen:

Figur 1 schematisch eine Schmelzwanne mit nachgeordnetem Hochtemperaturaggregat, und

Figur 2 ein Gasfluss/Temperaturdiagramm bei einer Läuterung mit dem Läutermittel $SnO_2$ (Vergleichsmessung) und

Figur 3 ein Gasfluss/Temperaturdiagramm bei einer zweistufigen Läuterung mit den Läutermitteln $SO_3$ und $SnO_2$,

Figur 4 die Abhängigkeit der Lichttransmission Y vom $SnO_2$- und $Nd_2O_3$Gehalt bei transparent farblosen Glaskeramiken mit 4 mm Schichtdicke und einem $Fe_2O_3$-Gehalt von 0,020 Gew%, und

Figur 5 die Abhängigkeit der Buntheit C* vom $SnO_2$- und $Nd_2O_3$-Gehalt bei transparent farblosen Glaskeramiken mit 4 mm Schichtdicke und einem $Fe_2O_3$-Gehalt von 0,020 Gew%.

In der Figur 1 ist eine Schmelzwanne 1 mit Einlegewand 2, Bodenwand 3 und Auslauf 4 dargestellt. Als bevorzugter Wannentyp wird eine konventionell fossil beheizbare Wanne mit oder ohne elektrische Zusatzbeheizung eingesetzt.

Die Schmelzwanne ist in einen ersten Bereich 10 und einen zweiten Bereich 20 unterteilt. Im ersten Bereich 10 wird das Gemenge aufgegeben, so dass sich dort zunächst eine Rauschmelze mit einem porösen Gemengeteppich 12 ausbildet. Unterhalb des Gemengeteppichs 12 befindet sich aufgeschmolzenes Gemenge, in dem noch teilweise nicht aufgeschmolzene Partikel, insbesondere die schwer schmelzenden Komponenten vorhanden sind.

Es bildet sich unter dem Gemengeteppich 12 eine linksdrehende Hauptströmungswalze 13 aus, die unterhalb des Gemengeteppichs vorbeistreicht und kontinuierlich Material aufnimmt und in die Schmelze überführt.

Diese Hauptströmungswalze 13 erstreckt sich bis etwa in den mittleren Bereich der Schmelzwanne 1, wobei sich Teilströme 14 von der Hauptströmungswalze 13 ablösen und in den zweiten Bereich 20 strömen. Die Bereiche 10 und 20 können optional durch ein Einbauteil z. B. einen Wall 5, mit dem die heiße Glasschmelze zwangsweise an die Oberfläche der Schmelzwanne geführt wird, abgetrennt werden.

Beide Bereiche werden durch den so genannten Quellpunkt 15 getrennt, der auch als Hotspot bezeichnet wird. Dies ist ein Bereich mit einer hohen lokalen Temperatur der Schmelze.

In dem ersten Bereich 10 wird eine Primärläuterung durchgeführt. Die mittlere Temperatur $T_1$ in diesem Bereich 10 liegt oberhalb von 1560 °C. Im zweiten Bereich 20 liegt die mittlere Temperatur $T_2$ deutlich höher, nämlich über 1640 °C. In diesem zweiten Bereich wird die Sekundärläuterung durchgeführt.

Die mittlere Verweildauer $t_1$ im Bereich 10 beträgt mehr als zwei Stunden. Die mittlere Verweildauer kann durch verschiedene Parameter, wie z. B. durch die geometrischen Abmessungen, insbesondere die Länge der Wanne entsprechend eingestellt werden.

Dies gilt auch für die mittlere Verweildauer $t_2$ im zweiten Bereich 20, wo die mittlere Verweildauer $t_2$ mindestens eine Stunde betragen soll.

Der Auslauf 4 ist optional mit einem Hochtemperatur-Aggregat 6 verbunden, wo die Hochtemperaturläuterung stattfindet. Die Hochtemperaturläuterung wird bei Temperaturen > 1750°C durchgeführt. Da der $SO_3$-Anteil < 0,002 Gew.% beträgt, kann der unerwünschte Reboil-Effekt aufgrund des niedrigen $SO_3$-Gehaltes nicht auftreten, so dass am Ende des Hochtemperatur-Aggregat 6 ein blasenfreies Glas (< 2 Blase/kg, vorzugsweise < 1 Blase/kg) erzeugt werden kann.

In der Figur 2 ist der freigesetzte Gasfluss (Evolved Gas Analysis-Messungen, abgekürzt mit EGA-Messungen) von $O_2$ für die reine $SnO_2$-Läuterung als Funktion der Temperatur für die beiden Bereiche 10 und 20 einer Lithium-Alumo-Silicat Glaszusammensetzung aufgetragen. Für die Messung wird 50g Gemenge mit 8K/min von Raumtemperatur auf 1680°C aufgeheizt und die freigesetzten Gase in Abhängigkeit von der Temperatur mittels Massenspektrometer analysiert. Es ist zu sehen, dass eine nennenswerte $O_2$-Freisetzung ab etwa 1500 °C einsetzt und bei ca. 1620 °C das Maximum von 0,5 ml/100g Gemenge erreicht; es handelt sich um eine typische Gasfreisetzungskurve von $O_2$ aus der thermischen Zersetzung von $SnO_2$ in SnO.

Die in Figur 2 erkennbare geringfügige $SO_2$ und $O_2$-Freisetzung zwischen 1100 °C und 1300 °C ist auf unvermeidliche Verunreinigungen von Sulfat in den Rohstoffen zurückzuführen und ist läutertechnisch nicht relevant.

In der Figur 3 ist der freigesetzte Gasfluss von $SO_2$ und $O_2$ für die zweistufige Sulfat-Zinn-Läuterung als Funktion der Temperatur für die beiden Bereiche 10 und 20 einer Lithium-Alumo-Silicat-Glaszusammensetzung aufgetragen. Ab etwa 1100 °C beginnt im porösen Gemengeteppich die Freisetzung von $O_2$ und $SO_2$ auf Grund der Zersetzung von $BaSO_4$. Dadurch werden zwischen den Gemengepartikeln befindlichen Gase wie z. B. Luft aus dem Gemengeteppich entfernt. Mit weiter zunehmender Temperatur geht der poröse Gemengeteppich in eine Glasschmelze über. Nachdem die $SO_2$-Freisetzung stark abgeklungen ist, beginnt ab etwa 1550 °C die Sekundärläuterung mit der Freisetzung von $O_2$ aus der Zersetzung von $SnO_2$. Obwohl die gleiche $SnO_2$-Konzentration mit 0,2 Gew.-% wie in Figur 2 vorliegt, ist zu erkennen, dass im Vergleich zur reinen Zinn-Läuterung das Maximum an $O_2$ im Sekundärläuterbereich auf 0,7 ml/100g Gemenge ansteigt, und zwar weil die $O_2$-Freisetzung aus dem Sulfat den $O_2$-Umsatz aus dem $SnO_2$ während der Primärläuterung hemmt.

Die Temperaturen der eben beschriebenen Gasflüsse (EGA-Messungen) sind nicht direkt auf Wannenverhältnisse übertragbar, da sich Aufheizraten und Oberflächen-Volumenverhältnisse zwischen Labormessungen und Wanne unterscheiden, die Messungen zeigen die Temperaturbereiche der Läutergasfreisetzung unter Laborbedingungen an. Die tatsächlichen Temperaturen der Gasfreisetzung wurden im Kleinwannenversuch ermittelt und sind im Vergleich zu den EGA-Messungen nach höheren Temperaturen verschoben.

Die Figur 4 zeigt die Abhängigkeit der Lichttransmission Y vom $SnO_2$- und $Nd_2O_3$-Gehalt von transparent farblosen Glaskeramiken mit 4 mm Schichtdicke. Zusammensetzung 1 aus der Tabelle 1 wurde in einer Kleinwanne mit verschiedenen $SnO_2$-Gehalten geschmolzen. Die analysierten $SnO_2$-Werte liegen zwischen 0,23 Gew% und 0,003 Gew% und die analysierten $Fe_2O_3$-Gehalte betragen jeweils 0,020 Gew%. Mit fallendem $SnO_2$-Gehalt von 0,23 Gew% auf 0,003 Gew% wurde der $Nd_2O_3$-Gehalt auch von 0,048 Gew% auf < 0,005 Gew% zurückgenommen.

Die Grafik in Figur 4 zeigt eine sehr starke Abhängigkeit der Lichttransmission Y vom $SnO_2$- und $Nd_2O_3$-Gehalt. Je höher der $SnO_2$- und $Nd_2O_3$-Gehalt ist, umso schlechter ist die Lichttransmission Y. Die Lichttransmission Y liegt

zwischen 83,3% bei 0,23 Gew% $SnO_2$ und 0,048 Gew% $Nd_2O_3$ und 88,2% bei 0,02 Gew% $SnO_2$ und < 0,005 Gew% $Nd_2O_3$. Die eingezeichnete Kurve ist die logarithmische Regressionskurve an die Messpunkte.

Figur 5 zeigt die Abhängigkeit der Buntheit C* vom $SnO_2$- und $Nd_2O_3$-Gehalt von transparenten, farblosen Glaskeramiken mit 4 mm Schichtdicke. Die Zusammensetzung 1 aus Tabelle 1 wurde in einer Kleinwanne mit verschiedenen $SnO_2$-Gehalten geschmolzen. Die analysierten $SnO_2$-Werte liegen zwischen 0,23 Gew% und 0,003 Gew% und die analysierten $Fe_2O_3$-Gehalte betragen jeweils 0,020 Gew%. Je höher der $SnO_2$-Gehalt ist, umso schlechter ist die Buntheit C*. Mit der Zugabe von $Nd_2O_3$ kann die Buntheit C* verbessert werden. Deshalb wurden bei 0,23 Gew% $SnO_2$ 0,048 Gew% $Nd_2O_3$ zugegeben. Mit fallendem $SnO_2$-Gehalt von 0,23 Gew% auf 0,003 Gew% wurde der $Nd_2O_3$-Gehalt auch von 0,048 Gew% auf < 0,005 Gew% zurückgenommen. Die Grafik zeigt eine sehr starke Abhängigkeit der Buntheit C* vom $SnO_2$- und $Nd_2O_3$-Gehalt. Die Buntheit C* liegt zwischen 6 bei 0,23 Gew% $SnO_2$ und 0,048 Gew% $Nd_2O_3$ und 3,9 bei 0,02 Gew% $SnO_2$ und < 0,005 Gew% $Nd_2O_3$. Die eingezeichnete Kurve ist die Regressionsgerade an die Messpunkte.

Die Erfindung wird anhand von Beispielen näher erläutert:

Tabelle 1: Glaszusammensetzungen aus den nachfolgenden Beispielen $SO_3$-Synthese bedeutet: Menge an $SO_3$ in Gew%, aus der Menge $SO_3$ wird die Menge $BaSO_4$ errechnet, das dem Gemenge zugesetzt wird. Alle anderen Angaben sind analytisch ermittelte Werte im Glas.

| in Gew% | Zusammensetzung 1 | Zusammensetzung 2 | Zusammensetzung 3 | Zusammensetzung 4 | Zusammensetzung 5 | Zusammensetzung 6 (Vergleichsbeispiel 2) | Zusammensetzung 7 (Vergleichsbeispiel 1) |
|---|---|---|---|---|---|---|---|
| | | | | | | | |
| $SiO_2$ | 66,9 | 66,9 | 65,0 | 65,1 | 65,2 | 65,2 | 66,9 |
| $Al_2O_3$ | 21,2 | 21,3 | 22,2 | 20,9 | 20,8 | 20,8 | 21,2 |
| $Fe_2O_3$ | 0,02 | 0,02 | 0,019 | 0,085 | 0,12 | 0,087 | 0,02 |
| $Na_2O$ | 0,4 | 0,4 | 0,6 | 0,6 | 0,6 | 0,5 | 0,4 |
| $K_2O$ | 0,07 | 0,07 | --- | 0,22 | 0,24 | 0,16 | 0,07 |
| CaO | 0,12 | 0,12 | --- | 0,42 | 0,44 | 0,42 | 0,12 |
| MgO | 0,83 | 0,83 | 0,59 | 0,37 | 0,34 | 0,34 | 0,83 |
| SrO | 0,48 | 0,48 | | 0,02 | 0,10 | 0,02 | 0,48 |
| BaO | 0,73 | 0,73 | 2,02 | 2,3 | 2,19 | 2,22 | 0,73 |
| $TiO_2$ | 2,13 | 2,13 | 2,26 | 3,1 | 3,11 | 3,11 | 2,36 |
| ZnO | 1,60 | 1,60 | 1,76 | 1,5 | 1,52 | 1,52 | 1,6 |
| $ZrO_2$ | 1,70 | 1,70 | 1,76 | 1,34 | 1,38 | 1,41 | 1,7 |
| $Li_2O$ | 3,54 | 3,54 | 3,8 | 3,71 | 3,61 | 3,95 | 3,54 |
| $Nd_2O_3$ | 0,048 | 0,028 | --- | --- | 0,015 | --- | --- |
| $SnO_2$ | 0,25 | 0,15 | 0,10 | 0,24 | 0,24 | 0,22 | --- |
| $SO_3$ Synthese | 0,26 | 0,26 | 0,53 | 0,26 | 0,53 | --- | 0,26 |
| $MnO_2$ | --- | --- | --- | 0,01 | 0,02 | 0,01 | --- |
| $V_2O_5$ | --- | --- | --- | 0,026 | 0,024 | 0,023 | --- |

**Beispiel 1 (Kleinwanne)**

Eine $Nd_2O_3$-haltige Lithium-Alumo-Silicat-Glaszusammensetzung (Zusammensetzung 1) mit 0,25 Gew% $SnO_2$ wurde in einer Kleinwanne geschmolzen. Das Gemenge enthielt 0,26 Gew% $SO_3$, zugesetzt als Ba-Sulfat. Verwendet wurden handelsübliche technische Rohstoffe (Quarzmehl, $Al_2O_3$, Al-Hydroxid, Na-Nitrat, K-Carbonat, Li-Carbonat, MgO, $TiO_2$, Zirkonsilicat, ZnO, Ca-, Sr-, Ba-Carbonat, $Nd_2O_3$, $SnO_2$, Ba-Sulfat) mit einem Gesamt-Gehalt an $Fe_2O_3$ von 0,02 Gew%. Dem Gemenge wurden keine Farboxide zugesetzt. 0,4 Gew% $Na_2O$ wurden als Na-Nitrat zugegeben. Nach mittleren Schmelztemperaturen von ca. 1580 °C bis 1600 °C für die Primärläuterung wurde die mittlere Schmelztemperatur für die Sekundärläuterung auf 1640 °C erhöht. Die mittleren Verweilzeiten lagen jeweils > 4h. Probennahmen nach der Wanne zeigten, dass das Glas reliktfrei geschmolzen wurde. Die Blasenkonzentrationen lagen je nach Schmelzparameter (Schmelztemperatur und Verweilzeit) zwischen 10 und 100 Blasen/kg. Der Gehalt an $SO_3$ am Ende der Wanne betrug in jedem Fall weniger als 0,0012 Gew%; die analysierte Konzentration von $SnO_2$ im Glas lag bei 0,23 Gew%. Es wurden ca. 40 % bis 50 % $SnO_2$ zu SnO umgesetzt.

Die anschließende Hochtemperaturläuterung bei Temperaturen zwischen 1760 °C und max. 1850 °C mit mittleren Verweilzeiten von 15 min führte zu transparentem farblosem Glas mit Blasenkonzentrationen stabil < 1 Blase/kg. Das so hergestellte farblose $Nd_2O_3$-haltige Lithium-Alumo-Silicat-Glas wurde durch Keramisierung in eine Glaskeramik umgewandelt und dessen Transmission und Farbe gemessen. Die Glaskeramik hatte bei einer Schichtdicke von 4 mm eine Lichttransmission Y gemäß des CIE-Farbsystems von 83,5 % und eine Buntheit C* im CIE-LAB-Farbsystem von 6,0.

**Beispiel 2 (Kleinwanne ohne Hochtemperaturläuterung)**

Wie in Beispiel 1 wurde die $Nd_2O_3$-haltige Lithium-Alumo-Silicat-Glaszusammensetzung 1 mit 0,25 Gew% $SnO_2$ und 0,26 Gew% $SO_3$, zugesetzt als Ba-Sulfat in einer Kleinwanne mit vergleichbaren Rohstoffen geschmolzen. Das Gemenge war ohne Zusatz von Farboxiden. Nach mittleren Schmelztemperaturen von ca. 1600 °C und mittleren Verweilzeiten von > 5 h für die Primärläuterung wurde die mittlere Schmelztemperatur für die Sekundärläuterung auf ca. 1660 °C erhöht. Die mittleren Verweilzeiten lagen bei mehr als 3 h. Das Glas war reliktfrei geschmolzen. Der $SO_3$-Gehalt nach der Wanne lag unter 0,0012 Gew% und die Blasenkonzentration (Blasen > 100 $\mu$m) sank stabil unter 2 Blase/kg. Eine Hochtemperaturläuterung war nicht mehr notwendig.

**Beispiel 3 (Laborversuch mit wenig $SnO_2$)**

Im Gasofen wurden 1,4 kg Gemenge aus der Lithium-Alumo-Silicat-Zusammensetzung 3 mit konventionellen technischen Rohstoffen mit 0,10 Gew% $SnO_2$ und 0,53 Gew% $SO_3$ als $BaSO_4$ für 4 h bei 1600 °C geschmolzen. Anschließend wurde gerührt und die Temperatur auf 1680 °C erhöht und weitere 4 h bei 1680 °C gehalten. Nach dem Guss enthielt das Glas ca. 50 Blasen/kg, der $SO_3$-Gehalt lag bei 0,0010 Gew%. Nach der Bewertung des Glases im kalten Zustand wurde das Glas einer Hochtemperaturläuterung unterzogen. Dazu wurden zylindrische Bohrkerne aus dem eben beschriebenen Glas passend für die Tiegel der Hochtemperaturläuterung hergestellt. Ein 55 mm hoher Bohrkern wurde in einem Ir-Tiegel mit einem Volumen von 140 ml erneut auf 1600 °C aufgeheizt, zum gleichmäßigen Durchschmelzen 30 min bei 1600 °C gehalten und dann mit 975 K/h auf 1925 °C erhitzt und 12 min bei der hohen Temperatur gehalten. Anschließend wurde das heiße Glas in ca. 8 min auf 1500 °C abgekühlt, 10 min gehalten und dann im Kühlofen auf Raumtemperatur thermisch entspannt.

Das Glas war völlig blasenfrei, alle Blasen wurden entfernt und es kam nicht zu einer Neublasenbildung im Hochtemperaturläuteraggregat.
Das Glas wurde durch thermische Behandlung in eine Glaskeramik überführt. Die Glaskeramik hatte bei einer Schichtdicke von 4 mm eine Transmission Y gemäß des CIE-Farbsystems von 86,2 % und eine Buntheit C* im CIE-LAB-Farbsystem von 4,3.

**Beispiel 4 (Kleinwanne mit wenig $SnO_2$)**

Die Transmission und insbesondere die Farbe der Lithium-Alumo-Silicat-Glaskeramik sind stark abhängig vom $SnO_2$-Gehalt.

$SnO_2$-Gehalte von 0,15 Gew% neben 0,26 Gew% $SO_3$ im Gemenge (Zusammensetzung 2) führen nach der nach Beispiel 1 beschriebenen Wannenfahrweise sowie nach der Keramisierung zu einer Lichttransmission Y gemäß des CIE-Farbsystems von 83,8 % bei 4 mm Schichtdicke und zu einer Buntheit C* im CIE-LAB-Farbsystem von 5,0 bei 4 mm Schichtdicke. Die erreichten Blasenzahlen lagen < 2/kg.

Weiter abnehmende $SnO_2$-Gehalte verbessern die Lichttransmission und Farbe weiter. Mit Abnahme des $SnO_2$-Gehaltes wurde auch der $Nd_2O_3$-Gehalt reduziert. $SnO_2$-Gehalte von 0,02 Gew% neben 0,26 Gew% $SO_3$ im Gemenge (Grundzusammensetzung 2 allerdings ohne $Nd_2O_3$-Zusatz) führen nach der nach Beispiel 1 beschriebenen

Wannenfahrweise sowie nach der Keramisierung zu einer Lichttransmission Y gemäß des CIE-Farbsystems von 88,2 % und zu einer Buntheit C* im CIE-LAB-Farbsystem von 3,9 bei 4 mm Schichtdicke. Die Abnahme des $SnO_2$-Gehaltes musste für eine ausreichende Läuterung durch höhere Schmelztemperaturen sowohl für Primär- als auch Sekundärläuterung kompensiert werden. Bei $SnO_2$-Gehalten < 0,1 Gew% lag die mittlere Schmelztemperatur $T_1$ bei ca. 1630°C und $T_2$ bei 1680°C verbunden mit mittleren Verweilzeiten von > 4h.

**Vergleichsbeispiel 1 (Läutermittel nur $SO_3$)**

Ohne gleichzeitige $SnO_2$-Zugabe, also bei reiner Sulfatläuterung fehlt der sekundäre Läuterschritt in der Wanne und eine Hochtemperaturläuterung ist unbedingt notwendig.

Eine $Nd_2O_3$-freie LAS-Glaszusammensetzung 7 wurde in einer Wanne ohne $SnO_2$-Zusatz geschmolzen. Verwendet wurden handelsübliche technische Rohstoffe (Quarzmehl, $Al_2O_3$, Al-Hydroxid, Na-Nitrat, K-Carbonat, Li-Carbonat, MgO, $TiO_2$, Zirkonsilicat, ZnO, Ca-, Sr-, Ba-Carbonat, Ba-Sulfat) mit einem Gesamt-$Fe_2O_3$-Gehalt von 0,02 Gew%. Das Gemenge enthielt 0,26 Gew% $SO_3$, zugesetzt als Ba-Sulfat. Dem Gemenge wurden keine Farboxide zugesetzt. 0,4 Gew% $Na_2O$ wurde als Na-Nitrat zugegeben. Nach Schmelztemperaturen von 1620 °C für die Primärläuterung wurde die mittlere Schmelztemperatur für die Sekundärläuterung auf über 1650 °C erhöht. Das Glas wurde reliktfrei geschmolzen. Die Blasenkonzentration am Ende des Wanne konnte nicht auf ausreichend kleine Werte < 2 Blasen/kg reduziert werden, sie lag bei ca. 50 Blasen/kg, teilweise bis zu 500 Blasen/kg je nach gewählten Schmelzparametern (Schmelztemperatur und Verweilzeit).

**Beispiel 5 (Labor gefärbte Glaskeramik)**

Im Labor wurden 1,4 kg Gemenge der LAS-Glaszusammensetzung 5 mit konventionellen Rohstoffen (Quarzmehl, $Al_2O_3$, Al-Hydroxid, K-, Ca-, Sr- und Ba-Carbonat, Na-Nitrat, Li-Carbonat, Petalit/Spodumen, MgO, $TiO_2$, Zirkonsilicat, ZnO, $Nd_2O_3$, $SnO_2$, Ba-Sulfat) und 0,53 Gew% $SO_3$ Läutermittel als Ba-Sulfat hergestellt.

Das Gemenge wurde im Gasofen bei Temperaturen von 1580 °C 4 h reliktfrei eingeschmolzen und anschließend in einer mit 50Hz beheizten Spule im Kieselglastiegel gerührt und 3 h lang bei 1640 °C gehalten, um eine Sekundärläuterung durchzuführen. Nach Ende der Schmelzzeit wurde das Glas gegossen und mit 20 K/h gekühlt. Das auf diese Weise hergestellte Glas enthielt noch ca. 300 Blasen/kg Glas. Der analysierte $SO_3$-Gehalt lag bei 0,0015 Gew%. Nach der Bewertung des Glases im kalten Zustand wurde das Glas einer Hochtemperaturläuterung bei 1860 °C mit Verweilzeiten von 12min unterzogen, wobei die Durchführung vergleichbar mit Beispiel 3 war. Das Glas war völlig blasenfrei, alle Blasen wurden entfernt und es kam nicht zu einer Neublasenbildung im Hochtemperaturläuteraggregat.

**Beispiel 6 (Kleinwanne gefärbte Glaskeramik)**

Eine Nd-freie Lithium-Alumo-Silicat-Glaszusammensetzung 4 mit 0,24 Gew% $SnO_2$ wurde in einer Wanne geschmolzen. Verwendet wurden handelsübliche technische Rohstoffe (Quarzmehl, $Al_2O_3$, Al-Hydroxid, K-, Ca- und Ba-Carbonat, Na-Nitrat, Li-Carbonat, Petalit/Spodumen, MgO, $TiO_2$, Zirkonsilicat, ZnO, $SnO_2$, Ba-Sulfat). Das Gemenge enthielt 0,26 Gew% $SO_3$, zugesetzt als Ba-Sulfat. Dem Gemenge wurden ca. 0,026 Gew% $V_2O_5$ und 0,09 Gew% $Fe_2O_3$ als Farboxide zugesetzt. 0,59 Gew% $Na_2O$ wurden als Na-Nitrat zugegeben. Nach mittleren Schmelztemperaturen von ca. 1580 °C für die Primärläuterung wurde die mittlere Temperatur für die Sekundärläuterung auf 1640 °C erhöht. Die mittleren Verweilzeiten für die Sekundärläuterung lagen zwischen 3 und 8 h. Probennahmen nach der Wanne zeigten, dass das Glas reliktfrei geschmolzen wurde. Die Blasenkonzentrationen lagen bei ca. 20 Blasen/kg, je nach Schmelzparameter (Schmelztemperatur und Verweilzeit) auch bis 300 Blasen/kg. Der $SO_3$-Gehalt lag zwischen 0,0010 und 0,0013 Gew%. Die anschließende Hochtemperaturläuterung bei Temperaturen zwischen 1760 °C und ca. 1850 °C mit mittleren Verweilzeiten von 15 min führte zu Glas mit einer Blasenkonzentration < 1 Blase/kg.

Als die Schmelztemperaturen für Primär- und Sekundärläuterung um jeweils ca. 40 K angehoben wurden, wurden nach der Wanne stabil Blasenkonzentrationen < 2 Blasen/kg erreicht. Eine Hochtemperaturläuterung war nicht notwendig.

**Vergleichsbeispiel 2 (Läutermittel nur $SnO_2$)**

Wird die Lithium-Alumo-Silicat-Zusammensetzung 6 in der Wanne unter vergleichbaren Schmelzbedingungen wie in Beispiel 1, allerdings ohne Zusatz von Sulfat geschmolzen (reine $SnO_2$-Läuterung), war es selbst mit der Hochtemperaturläuterung nicht möglich, Blasenkonzentrationen stabil unter 2 Blasen/kg zu bekommen. Das Glas war nicht reliktfrei aufgeschmolzen; immer wieder traten $ZrO_2$-haltige Einschmelzrelikte im Produkt auf, diese Restrelikte sind permanente Blasenquellen. Besonders nachteilig ist dies, wenn nach Abschluss der Läuterung in der Wanne bzw. im Verlauf der Hochtemperaturläuterung durch die Auflösung der Relikte ständig neue relativ kleine Bläschen gebildet

werden.

Höhere Einschmelztemperaturen können zwar die Einschmelzrelikte verringern, aber es wird bereits in der Rauschmelze zu viel $SnO_2$ zu SnO umgesetzt. Bei der Sekundärläuterung steht dann nicht mehr ausreichend $O_2$ aus der $SnO_2$-Umsetzung zum Blasenwachstum zur Verfügung und die Blasen können nicht vollständig entfernt werden.

Anhand dieser Beispiele ist deutlich zu sehen, dass mit einer kombinierten Sulfat- und $SnO_2$-Läuterung bei farblosen und gefärbten Lithium-Alumo-Silicat-Glaszusammensetzungen bei Einhaltung der beanspruchten Parameter ein blasenfreies Glas mit und ohne Hochtemperaturläuterung hergestellt werden kann. Die Blasenkonzentration der Vergleichsversuche zeigen, dass mit $SnO_2$ allein bzw. Sulfat allein ohne Einsatz der Hochtemperaturläuterung keine Blasenqualität stabil < 2 Blasen/kg erreicht werden kann.

**Bezugszeichenliste**

| | |
|---|---|
| 1 | Schmelzwanne |
| 2 | Einlegewand |
| 3 | Bodenwand |
| 4 | Auslauf |
| 5 | Wall |
| 6 | Hochtemperaturtiegel |
| 10 | erster Bereich |
| 12 | Gemengeteppich |
| 13 | Hauptströmungswalze |
| 14 | Teilstrom |
| 15 | Quellpunkt |
| 20 | zweiter Bereich |

**Patentansprüche**

1. Verfahren zur Herstellung von Lithium-Alumo-Silicat-Glaskeramiken,
bei dem zur Herstellung eines Lithium-Alumo-Silicat-Glases ein bis auf unvermeidliche Rohstoffverunreinigungen Arsen- und Antimon-freies Glasgemenge und als Läutermittel mindestens eine Sulfatverbindung und $SnO_2$ eingesetzt wird, wobei $SnO_2$ in einer Menge von 0,02 bis 0,5 Gew.-% und die Sulfatverbindung in einer Menge dem Gemenge zugesetzt wird, die 0,05 bis 1 Gew.-% $SO_3$ entspricht,
wobei das das Läutermittel aufweisende Glasgemenge in einer Schmelzwanne (1) erschmolzen wird,
wobei in einem ersten Bereich (10) der Schmelzwanne (1) eingeschmolzen und eine Primärläuterung durchgeführt wird, wobei im ersten Bereich (10) eine mittlere Schmelztemperatur $T_1$ auf $T_1$ > 1560 °C bis 1640 °C und eine mittlere Verweildauer der Schmelze $t_1$ auf $t_1$ > 2 Stunden eingestellt wird, und der Anteil des durch Zersetzung der Sulfatverbindung entstandenen $SO_3$ während der Durchführung der Primärläuterung auf weniger als 0,002 Gew.-% abgesenkt wird, und
wobei in einem zweiten Bereich (20) der Schmelzwanne (1) eine Sekundärläuterung durchgeführt wird, wobei im zweiten Bereich (20) eine mittlere Schmelztemperatur $T_2$ auf $T_2$ > 1640 C bis 1720° C und eine mittlere Verweildauer der Schmelze $t_2$ auf $t_2$ > 1 Stunde eingestellt wird,
wobei für das Verhältnis $t_1/t_2$ gilt:

$$2 < \frac{t_1}{t_2} < 25$$

und wobei das Lithium-Alumo-Silicat Glas durch eine thermische Behandlung in eine Lithium-Alumo-Silicat-Glaskeramik umgewandelt wird.

2. Verfahren nach Anspruch 1, **dadurch gekennzeichnet,**
**dass** als Läutermittel mindestens ein Alkalisulfat und/oder mindestens ein Erdalkalisulfat dem Glasgemenge zugegeben wird.

3. Verfahren nach Anspruch 1 oder 2, **dadurch gekennzeichnet,**

**dass** als Läutermittel $BaSO_4$ und/oder $CaSO_4$ eingesetzt wird.

4. Verfahren nach Anspruch 1 oder 2, **dadurch gekennzeichnet, dass** als Läutermittel $Na_2SO_4$ zugesetzt wird.

5. Verfahren nach einem der vorhergehenden Ansprüche, **dadurch gekennzeichnet,** **dass** eine 3. Läuterstufe in Form einer Hochtemperaturläuterung bei Temperaturen > 1750 °C durchgeführt wird.

6. Verfahren nach einem der vorhergehenden Ansprüche, **dadurch gekennzeichnet,** **dass** die Hochtemperaturläuterung über eine Zeitdauer von mindestens 12 min durchgeführt wird.

7. Verfahren nach einem der vorhergehenden Ansprüche, **dadurch gekennzeichnet,** **dass** im ersten Bereich (10) oxidierend eingeschmolzen wird.

8. Verfahren nach einem der vorhergehenden Ansprüche, **dadurch gekennzeichnet,** **dass** dem Glasgemenge Nitrat in einer Konzentration von 0 bis 3 Gew.-% zugegeben wird.

9. Verfahren nach einem der vorhergehenden Ansprüche, **dadurch gekennzeichnet,** **dass** transparente, farblose Glaskeramiken hergestellt werden.

10. Verfahren nach einem der Ansprüche 1 bis 8, **dadurch gekennzeichnet,** **dass** transparente gefärbte Glaskeramiken durch Zusatz färbenden Komponenten hergestellt werden.

## Claims

1. Process for producing lithium aluminosilicate glass-ceramics, wherein a lithium aluminosilicate glass is produced using a glass mix which is, except for unavoidable impurities in the raw materials, arsenic- and antimony-free and using at least one solvate compound and $SnO_2$ as refining agent, where $SnO_2$ is added in an amount of from 0.02 to 0.5% by weight and the solvate compound is added to the mix in an amount which corresponds to from 0.05 to 1% by weight of $SO_3$, where the glass mix comprising the refining agent is melted in a melting tank (1), where melting and primary refining is carried out in a first region (10) of the melting tank (1), where an average melting temperature $T_1$ is set to $T_1$ from > 1560°C to 1640°C and an average residence time of the melt $t_1$ is set to $t_1$ > 2 hours in the first region (10) and the proportion of the $SO_3$ formed by decomposition of the solvate compound is decreased to less than 0.002% by weight while carrying out the primary refining, and where secondary refining is carried out in a second region (20) of the melting tank (1), where an average melting temperature $T_2$ is set to $T_2$ from > 1640°C to 1720°C and an average residence time of the melt $t_2$ is set to $t_2$ > 1 hour in the second region (20), where the ratio $t_1/t_2$ obeys the following relationship:

$$2 < \frac{t_1}{t_2} < 25$$

and the lithium aluminosilicate glass is converted into a lithium aluminosilicate glass-ceramic by a thermal treatment.

2. Process according to Claim 1, **characterized in that** at least one alkali metal sulfate and/or at least one alkaline earth metal sulfate is added as refining agent to the glass mix.

3. Process according to Claim 1 or 2, **characterized in that** $BaSO_4$ and/or $CaSO_4$ is used as refining agent.

4. Process according to Claim 1 or 2, **characterized in that** $Na_2SO_4$ is used as refining agent.

5. Process according to any of the preceding claims, **characterized in that** a 3rd refining stage in the form of high-temperature refining at temperatures of > 1750°C is carried out.

6. Process according to any of the preceding claims, **characterized in that** the high-temperature refining is carried out over a period of at least 12 minutes.

7. Process according to any of the preceding claims, **characterized in that** melting is carried out under oxidizing conditions in the first region (10).

8. Process according to any of the preceding claims, **characterized in that** nitrate is added in a concentration of from 0 to 3% by weight to the glass mix.

9. Process according to any of the preceding claims, **characterized in that** transparent, colourless glass-ceramics are produced.

10. Process according to any of Claims 1 to 8, **characterized in that** transparent coloured glass-ceramics are produced by addition of colour-imparting components.

## Revendications

1. Procédé de fabrication de vitrocéramiques à base d'alumo-silicate de lithium, selon lequel, pour la fabrication d'un verre à base d'alumo-silicate de lithium, un mélange vitrifiable exempt d'arsenic et d'antimoine à l'exception des impuretés inévitables des matières premières, et au moins un composé de sulfate et $SnO_2$ en tant qu'agents d'affinage sont utilisés, $SnO_2$ étant ajouté en une quantité de 0,02 à 0,5 % en poids et le composé de sulfate en une quantité qui correspond à 0,05 à 1 % en poids de $SO_3$ au mélange,
le mélange vitrifiable comprenant l'agent d'affinage étant fondu dans une cuve de fusion (1),
la fusion et un affinage primaire étant réalisés dans une première zone (10) de la cuve de fusion (1), une température de fusion moyenne $T_1$ de $T_1$ > 1 560 °C à 1 640 °C et un temps de séjour moyen de la matière fondue $t_1$ de $t_1$ > 2 heures étant réglés dans la première zone (10), et la proportion de $SO_3$ formé par décomposition du composé de sulfate étant abaissée pendant la réalisation de l'affinage primaire à moins de 0,002 % en poids, et
un affinage secondaire étant réalisé dans une deuxième zone (20) de la cuve de fusion (1), une température de fusion moyenne $T_2$ de $T_2$ > 1640 °C à 1 720 °C et un temps de séjour moyen de la matière fondue $t_2$ de $t_2$ > 1 heure étant réglés dans la deuxième zone (20),
avec pour le rapport $t_1/t_2$ :

$$2 < \frac{t_1}{t_2} < 25$$

et le verre à base d'alumo-silicate de lithium étant transformé par traitement thermique en une vitrocéramique à base d'alumo-silicate de lithium.

2. Procédé selon la revendication 1, **caractérisé en ce qu'**au moins un sulfate alcalin et/ou au moins un sulfate alcalino-terreux sont ajoutés au mélange vitrifiable en tant qu'agents d'affinage.

3. Procédé selon la revendication 1 ou 2, **caractérisé en ce que** $BaSO_4$ et/ou $CaSO_4$ sont utilisés en tant qu'agents d'affinage.

4. Procédé selon la revendication 1 ou 2, **caractérisé en ce que** $Na_2SO_4$ est ajouté en tant qu'agent d'affinage.

5. Procédé selon l'une quelconque des revendications précédentes, **caractérisé en ce qu'**une 3e étape d'affinage est réalisée sous la forme d'un affinage à température élevée à des températures > 1 750 °C.

6. Procédé selon l'une quelconque des revendications précédentes, **caractérisé en ce que** l'affinage à température élevée est réalisé pendant une durée d'au moins 12 minutes.

7. Procédé selon l'une quelconque des revendications précédentes, **caractérisé en ce qu'**une fusion oxydante a lieu

dans la première zone (10).

8. Procédé selon l'une quelconque des revendications précédentes, **caractérisé en ce qu'**un nitrate est ajouté au mélange vitrifiable en une concentration de 0 à 3 % en poids.

9. Procédé selon l'une quelconque des revendications précédentes, **caractérisé en ce que** des vitrocéramiques transparentes incolores sont fabriquées.

10. Procédé selon l'une quelconque des revendications 1 à 8, **caractérisé en ce que** des vitrocéramiques transparentes colorées sont fabriquées par ajout de composants colorants.

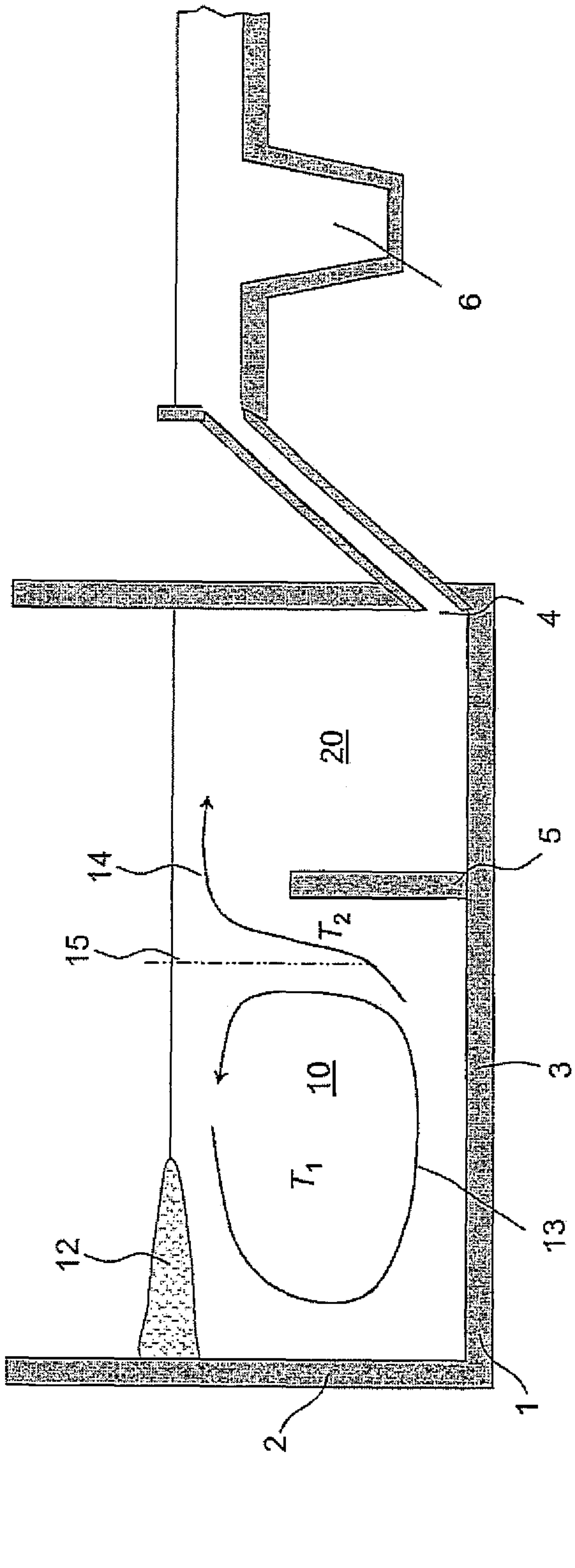


Figur 1

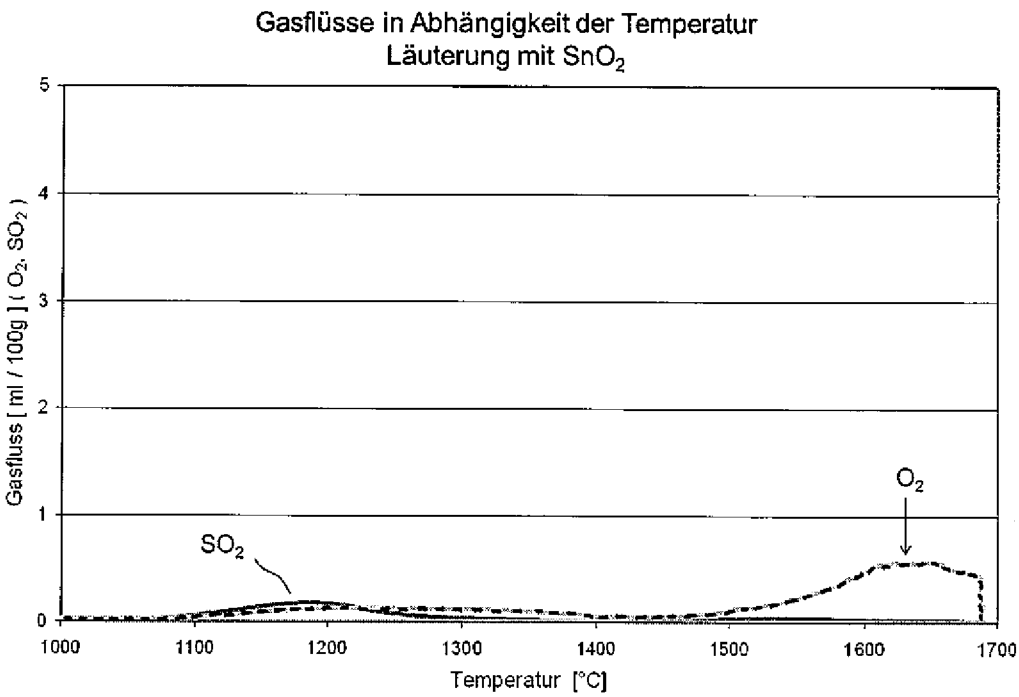
Gasflüsse in Abhängigkeit der Temperatur
Läuterung mit $SnO_2$
Gasfluss [ ml / 100g ] ( $O_2$, $SO_2$ )
5
4
3
2
1
0
$SO_2$
$O_2$
1000
1100
1200
1300
1400
1500
1600
1700
Temperatur [°C]

Figur 2

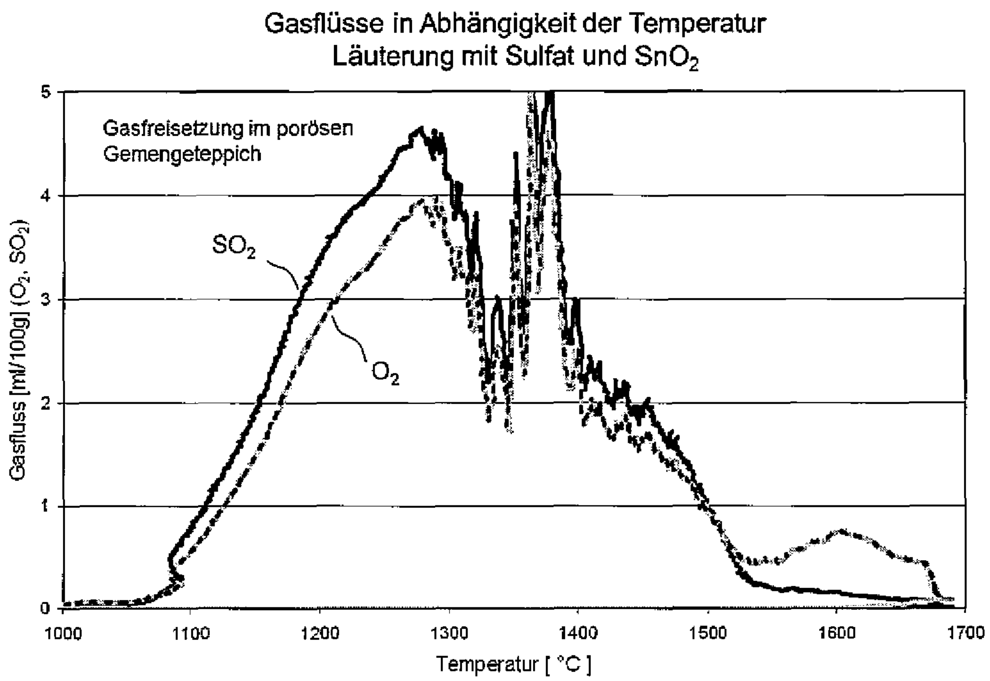
Gasflüsse in Abhängigkeit der Temperatur
Läuterung mit Sulfat und SnO2
Gasfreisetzung im porösen Gemengeteppich
SO2
O2
Gasfluss [ml/100g] (O2, SO2)
0
1
2
3
4
5
1000
1100
1200
1300
1400
1500
1600
1700
Temperatur [ °C ]

Figur 3

Fig. 4

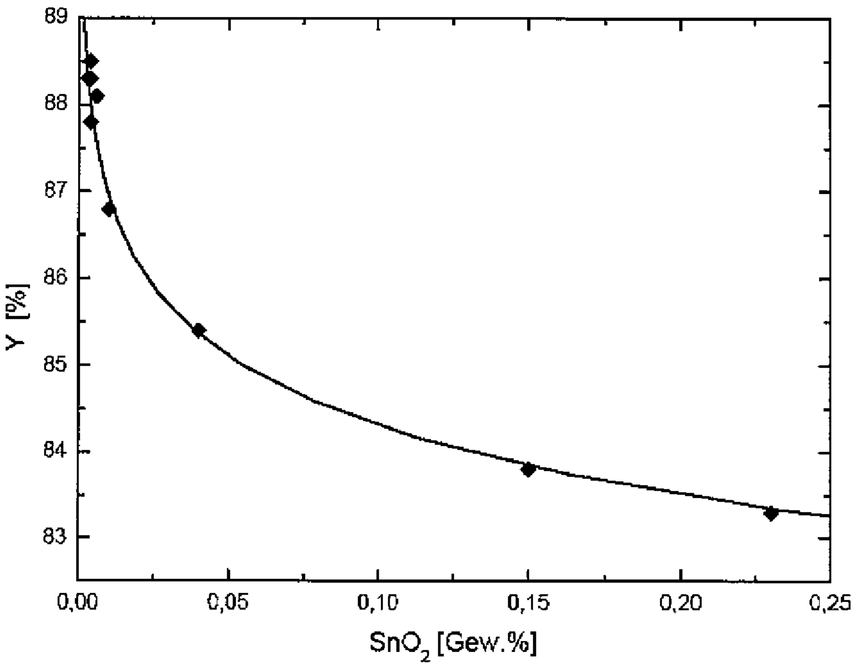


Figur 4

Fig. 5

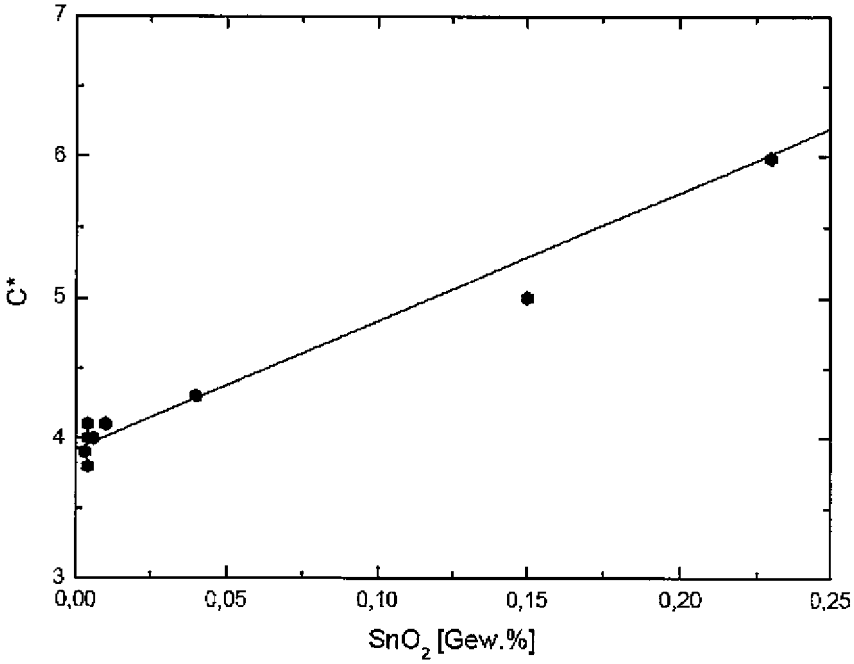


Figur 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 19939771 A1
- DE 19939787 A1
- US 7763559 B2
- US 6376403 B1
- DE 10346197 B4
- WO 2007018910 A2
- WO 2008123942 A1
- WO 2008065166 A
- DE 102009011850 B3
- WO 2012010278 A1
- EP 1837312 B1